# EUROPÄISCHE PATENTSCHRIFT

(11) **EP 2 760 685 B1**
(45) Veröffentlichungstag und Bekanntmachung des Hinweises auf die Patenterteilung: **04.10.2017**
(21) Anmeldenummer: 12728192.1
(22) Anmeldetag: 15.06.2012
(51) Int. Cl.: B60H 1/34

(54) **LUFTAUSSTRÖMER EINES LÜFTUNGS- UND HEIZUNGSMODULS FÜR KRAFTFAHRZEUGE MIT EINER UMSCHALTUNG ZWISCHEN EINER SPOTSTELLUNG UND EINER DIFFUSSTELLUNG**
AIR OUTLET OF A VENTILATION AND HEATING MODULE FOR MOTOR VEHICLES, HAVING MEANS FOR SWITCHING BETWEEN A SPOT SETTING AND A DIFFUSE SETTING
DIFFUSEUR D'AIR D'UN MODULE DE VENTILATION ET DE CHAUFFAGE DE VÉHICULES AUTOMOBILES, POUVANT CHANGER DE POSITION ENTRE UNE POSITION DE FOCALISATION ET UNE POSITION DE DIFFUSION

(30) Priorität: 28.09.2011 DE 102011115178
(43) Veröffentlichungstag der Anmeldung: 06.08.2014
(73) Patentinhaber: Audi AG, 85045 Ingolstadt (DE)
(72) Erfinder: ROSS, Steffen, 85139 Wettstetten (DE); NADLER, Reinhold, 85134 Stammham (DE); FOIDL, Hannes, 85114 Tauberfeld (DE); ENDRES, Gerhard, 95336 Mainleus (DE)
(74) Vertreter: Mader, Wilfried
(86) Internationale Anmeldenummer: PCT/EP2012/002525
(87) Internationale Veröffentlichungsnummer: WO 2013/045004

(56) Entgegenhaltungen:
- EP-A1- 1 752 324
- DE-A1- 10 046 628
- DE-U1- 20 100 740
- DE-U1- 29 817 513

## Beschreibung

Die Erfindung betrifft einen Luftausströmer eines Lüftungs- und Heizungsmoduls für Kraftfahrzeuge gemäß Oberbegriff des Patentanspruchs 1.

Aus der gattungsbildenden DE 201 00 740 U1 ist ein solcher Luftausströmer für Fahrzeugklimatisierung bekannt, welcher mehrere in einem Rahmen angeordnete Luftführungslamellen aufweist, die um eine Achse verschwenkbar angeordnet sind. Ferner ist ein erstes Koppelelement vorgesehen, das mit den Luftführungslamellen schwenkbar gekoppelt ist, wobei das erste Koppelelement relativ zu den Achsen der Luftführungslamellen zwischen einer Neutralstellung, in der die Luftführungslamellen zueinander parallel sind und einer Komfortstellung verstellbar ist, in der zur Bildung einer Diffusstellung die Lamellen in zueinander entgegengesetzten Richtungen verschwenkt, also aufgefächert werden, so dass sich dadurch ein divergierender Luftstrom ergibt. Aus der Neutralstellung kann mittels eines zweiten, im Luftaustrittsbereich angeordneten Koppelelementes, welches senkrecht zur Verschieberichtung des ersten Koppelelementes verschiebbar und mit den Luftführungslamellen gekoppelt ist, eine Spotstellung der Luftführungslamellen eingestellt werden. Mittels eines an der Neutrallamelle angeordneten Bedienelementes lässt sich eine solche Spotstellung einstellen. Die Neutrallamelle stellt die mittige Luftführungslamelle von einer ungeradzahligen Anzahl von Luftführungslamellen dar.

Zur Einstellung der Luftführungslamellen in die Diffusstellung ist bei diesem bekannten Luftausströmer ein als zweiarmiger Hebel ausgebildetes Betätigungselement vorgesehen, welches mit einem Ende am ersten Koppelelement und mit dem anderen Ende an einem einen Rastmechanismus aufweisenden Taster anliegt, der von außerhalb des Luftausströmers aus zugänglich ist. Durch Betätigen des Tasters wird über das Betätigungselement das erste Koppelelement translatorisch zum zweiten Koppelelement hin in die Diffusstellung verschoben. In dieser Stellung wird das erste Koppelelement mittels des Rastmechanismus gehalten, bis das Betätigungselement durch eine erneute Betätigung des Tasters freigegeben wird und dadurch aufgrund einer Rückstellfeder das erste Koppelelement in die Neutralstellung der Luftführungslamellen gezogen wird.

Bei dieser bekannten Lösung ist die Mechanik zur Erzeugung der Diffusstellung als auch zur Einstellung einer aus der Neutralstellung heraus bewirkten Spotstellung der Luftführungslamellen im Bereich der Luftaustrittsöffnung des Luftausströmers angeordnet, so dass diese Mechanik für einen Fahrzeuginsassen sichtbar ist und dadurch der optische Eindruck nachteilig beeinflusst wird. Selbst wenn, wie in dieser DE 201 00 740 U1 vorgeschlagen wird, das erste Koppelelement über Koppelstangen mit den Außenlamellen gekoppelt wird, kann dieser Nachteil nicht vollständig verhindert werden. Ein weiterer Nachteil hinsichtlich der Verwendung solcher Koppelstangen besteht darin, dass hierdurch die Mechanik komplexer und daher auch störanfälliger wird.

Ferner ist aus der DE 100 46 628 A1 eine Heiz- und/oder Klimaautomatik für Fahrzeuge bekannt, die für die Luftverteilung und Luftmengensteuerung automatische Düsen aufweist. Diese Düsen sind als Mitteldüsen oder Seitendüsen im Armaturenbrett, an der Tür oder im Fond angeordnet, wobei zur Einstellung der Luftrichtung an den Düsen horizontal und vertikal angeordnete und motorisch angetriebene Luftführungslamellen und zur Einstellung der Luftmenge ebenfalls motorisch angetriebene Luftmengenklappen vorgesehen sind. Die Einstellung der Luftführungslamellen und der Luftmengenklappen erfolgt über ein in einer Steuereinheit abgelegtes Automatikprogramm, das auch die Steuersignale für die Stellmotoren zur richtigen Einstellung der Luftführungslamellen erzeugt. Mittels eines Düsenbedienfeldes ist dem Fahrer des Fahrzeuges eine Eingriffsmöglichkeit in die automatische Verstellung der sogenannten automatischen Düsen gegeben, indem er werkseitig vorgebbare Standardprogramme für die Einstellung der Lamellen und Luftmengenklappen je nach Wunsch auswählen kann. Außerdem kann er an zusätzlich an den Lamellen angeordneten Stellorganen manuell eingreifen und die Lamellen in Horizontal- und Vertikalrichtung verstellen und damit die Luftrichtung in den Fahrzeuginnenraum verstellen. Diese neuen Einstellungen können auch benutzerdefiniert gespeichert werden.

Ein Hinweis in dieser DE 100 46 628 A1 hinsichtlich der Mechanik zur Verstellung der Luftführungslamellen und der Luftmengenklappen ist nicht gegeben.

Weiterhin beschreibt die DE 298 17 513 U1 eine für ein Armaturenbrett eines Fahrzeugs vorgesehene Lüftungsdüse mit mehreren schwenkbaren Lamellen, mit denen zum einen die Lüftungsdüse verschließbar ist und zum anderen in geöffneter Stellung der austretende Luftstrom in Abhängigkeit der Stellung der Lamellen gelenkt werden kann. Um ausreichenden Bauraum unterhalb der Lüftungsdüse sicherzustellen, sind diese Lamellen mittels eines Steuergliedes derart miteinander gekoppelt, dass eine untere letzte Lamelle zusammen mit inneren Lamellen die Lüftungsdüse verschließen, jedoch eine obere letzte Lamelle ausschließlich der Lenkung des austretenden Luftstromes bei geöffneter Lüftungsdüse dient. Das Steuerglied kann aus zwei, an einem Ende der Lamellen angeschlossenen Steuerscheiben bestehen, wobei eine an die beiden letzten Lamellen angelenkt ist und die andere gelenkig mit den übrigen inneren Lamellen gelenkig verbunden ist. Das Steuerglied kann auch mit einer einzigen Steuerscheibe realisiert werden, an der neben den inneren Lamellen auch Lenkerlaschen angeschlossen sind, die mit den beiden letzten Lamellen verbunden sind. Schließlich beschreibt auch die EP 1 752 324 A1 eine Luftdüse mit Horizontallamellen, deren Betätigung über Koppelelemente erfolgt, die so ausgestaltet sind, dass zusätzlich zu einer gleichartigen Schwenkbewegung der Horizontallamellen eine weitere Bewegung realisierbar ist, die eine Lageänderung der Horizontallamellen in eine aufgefächerte Ausrichtung bewirkt. Durch eine solche Zusatzbewegung dieses Koppelelementes lassen sich sollen diffuse Luftströme erzeugt werden. Hierzu wird vorgeschlagen, das Koppelelement als Kulissenplatte oder als Koppelstange auszuführen. Die Koppelstange ist rechtwinklig zur Längsachse der Luftdüse verlagerbar und führt somit eine Bewegung ähnlich wie ein Vorgelegegetriebe aus. Ein diffuser Luftstrom wird durch seitliches Verschieben der Koppelstange erreicht. Als Nachteil einer solchen Koppelmechanik kann deren Sichtbarkeit für einen Fahrzeuginsassen angesehen werden, wodurch der optische Eindruck nachteilig beeinflusst wird.

Aufgabe der Erfindung ist es, einen Luftausströmer der eingangs genannten Art derart weiterzubilden, welcher wenig Bauraum einnimmt, insbesondere im Austrittsbereich des Luftstromes, so dass ein optisch hochwertiger Eindruck erzielt wird, ohne dass hierzu eine komplexe Mechanik erforderlich wäre.

Diese Aufgabe wird gelöst durch einen Luftausstörmer mit den Merkmalen des Patentanspruchs 1.

Bei einem solchen Luftausströmer eines Lüftungs- und Heizungsmoduls für Kraftfahrzeuge, welcher wenigstens waagerecht verlaufende Luftführungslamellen aufweist, die um eine fahrzeugfeste Achse schwenkbar und jeweils mit einem Koppelelement gekoppelt sind, wobei wenigstens eine Luftführungslamelle über eine Koppelstange mit dem Koppelelement gekoppelt ist und das Koppelelement relativ zur fahrzeugfesten Achse zwischen wenigstens einer eine Neutralstellung und eine Diffusstellung der Luftführungslamellen bewirkende Position in eine Verschieberichtung verschiebbar ist, zeichnet sich erfindungsgemäß dadurch aus, dass für jede Luftführungslamelle die Koppelstange als Schwinge ausgebildet ist, welche einenends mit einer Luftführungslamelle und andernends schwenkbar mit dem Lüftungs- und Heizungsmodul gekoppelt ist, und jede Schwinge über eine Kulissenführung mit dem Koppelelement gekoppelt ist.

Mit diesem erfindungsgemäßen Luftausströmer werden die wesentlichen Teile der Verstellmechanik mittels Schwingen für die Luftführungslamellen in den nicht sichtbaren Bereich des Luftausströmers verlegt, so dass diese von vorne für einen Fahrzeuginsassen nicht mehr sichtbar sind und sich dadurch ein Design eines solchen erfindungsgemäßen Luftausströmers mit einer optisch hochwertigen Anmutung gestalten lässt. Ferner kommt diese erfindungsgemäße Verstellmechanik im Vergleich zum oben beschriebenen Stand der Technik mit weniger Teilen aus, so dass durch die geringere Komplexität die Kosten für einen solchen Luftausströmer im Vergleich zum Stand der Technik geringer sind. Auch führt die geringere mechanische Komplexität zu einer geringeren Montagekomplexität, so dass dadurch auch die Montagekosten gesenkt werden können.

Bei einer vorteilhaften Weiterbildung der Erfindung ist eine Neutrallamelle vorgesehen, deren zugeordnete Schwinge über eine geradlinige Kulissenführung mit dem Koppelelement gekoppelt ist, wobei beidseitig dieser Neutrallamelle wenigstens eine Außenlamelle vorgesehen ist, deren jeweilige zugeordnete Schwinge zur Erzeugung der Diffusstellung über eine gekrümmte Kulissenführungen mit dem Koppelelement gekoppelt ist. Da die für die Erzeugung der Diffusstellung der Luftführungslamellen verantwortlichen Komponenten, wie bspw. das Koppelelement nach hinten in den nicht sichtbaren Bereich des Luftausströmers verlagert sind und durch die die Kopplung zwischen den Luftführungslamellen und dem Koppelelement herstellenden Schwingen zu langen Hebelarmen führen, kann der Bewegungsablauf bzw. das Bewegungsdesign der Luftführungslamellen mit einer hohen Wertanmutung gestaltet werden.

In einer Ausgestaltung der Erfindung ist vorgesehen, dass zur Erzeugung einer Spotstellung der Luftführungslamellen das Koppelelement senkrecht zu dessen Verschieberichtung verschiebbar ist, wobei die Schwinge einer Neutrallamelle mittels einer eine Schwenkbewegung ermöglichende Kulissenführung mit dem Lüftungs- und Heizungsmodul gekoppelt ist und die Schwinge von wenigstens einer, jeweils beidseitig der Neutrallamelle angeordneten Außenlamelle mittels einer eine Schwenkbewegung ermöglichende Kulissenführung mit den Außenlamellen gekoppelt ist. Damit kann jede mögliche Spotstellung der Luftführungslamellen eingestellt werden. Dabei ist es besonders vorteilhaft, dass aus jeder Spotstellung durch Verschieben des Koppelelementes die Diffusstellung eingestellt werden kann. Wohingegen die Diffusstellung bei dem bekannten Luftausströmer gemäß der DE 201 00 740 U1 nur aus einer Neutralstellung, bei der alle Luftführungslamellen parallel ausgerichtet sind, eingestellt werden kann.

Besonders vorteilhaft ist es gemäß einer weiteren Ausgestaltung der Erfindung, wenn eine verschiebbare Schieberplatte mit einer das Koppelelement aufnehmenden Mitnehmeröffnung vorgesehen ist, mit welcher eine translatorische Bewegung der Schieberplatte auf das Koppelelement übertragen wird, wobei vorzugsweise zur Erzeugung einer Spotstellung der Luftführungslamellen die Mitnehmeröffnung ausgebildet ist zum Verschieben des Koppelelementes senkrecht zu dessen Verschieberichtung. Dies stellt eine einfache mechanische Konstruktion dar, so dass lediglich durch das Verschieben der Schieberplatte in die Verschieberichtung das Koppelelement entsprechend mitgenommen wird, aber gleichzeitig in senkrechter Richtung hierzu die Mitnehmeröffnung so gestaltet ist, dass sich das Koppelelement zur Einstellung einer Spotstellung innerhalt dieser Mitnehmeröffnung verschieben lässt.

Um immer eine exakt definierte Diffusstellung zu erreichen, sieht eine vorteilhafte Ausgestaltung der Erfindung vor, dass zur Zentrierung der Diffusstellung der Luftführungslamellen das Koppelelement über eine Kulissenführung mit einer Gehäusewand des Lüftungs- und Heizungsmoduls gekoppelt ist. Vorzugsweise ist diese Kulissenführung im Wesentlichen herzförmig mit einer in die Verschieberichtung des Koppelelementes verlaufenden Herzspitze ausgebildet, wobei zur Erzeugung der Diffusstellung das Koppelelement mittels eines Koppelstiftes in die Herzspitze geführt wird. Insbesondere wird mit dieser Herzform erreicht, dass eine harmonische Bewegung des Koppelelementes aus einer eine Spotstellung bewirkende Position in die die Diffusstellung bewirkende Position erreicht wird.

Eine besonders vorteilhafte Ausgestaltung ergibt sich dadurch, dass ein im Bereich der Austrittsöffnung des Luftausströmers angelenkter Rückstellhebel vorgesehen ist, welcher über eine Kopplung mit dem Koppelelement in eine der Spotstellung der Luftführungslamellen entsprechenden Memory-Position verschwenkbar ist, wobei das freie Ende des in die Memory-Position verschwenkten Rückstellhebels unter Einhaltung dessen Schwenkstellung in Wirkverbindung mit einer in Wirkverbindung mit dem Koppelelement stehenden Schieberplatte über den Verschiebeweg dieser Schieberplatte in eine die die Diffusstellung der Luftführungslamellen bewirkende Position steht und die Kopplung des Rückstellhebels als Kulissenführung ausgebildet ist, welche beim Verschieben der Schieberplatte aus der die Diffusstellung bewirkende Position eine Mitnahme des Koppelelementes in die Memory-Position bewirkt.

Mit einem solchen Rückstellhebel wird eine Memory-Funktion realisiert, bei der das Koppelelement nach dem Verlassen der Diffusstellung wieder zurück in diejenige Position geführt wird, die das Koppelelement vor dessen Verschieben in die die Diffusstellung bewirkende Position hatte. Dies ist besonders dann vorteilhaft, wenn die Verschiebung des Koppelelements über eine aktuatorisch angetriebene Schiebeplatte erfolgt, so dass nach der Rückführung des Koppelelementes aus der die Diffusstellung bewirkende Position in die bspw. von dem Fahrer des Fahrzeugs ursprünglich eingestellte Spotstellung von den Luftführungslamellen wieder eingenommen wird.

Weiterbildungsgemäß hinsichtlich dieser Memory-Funktion ist es vorgesehen, dass zur Erzeugung der Wirkverbindung des freien Endes des Rückstellhebels mit der Schieberplatte der Rückstellhebel einen in Führungsbahnen der Schieberplatte eingreifenden Positionszapfen aufweist. Durch solche parallel angeordnete Führungsbahnen wird eine Rasterung erreicht, so dass für jede Spotstellung der Luftführungslamellen die zugehörige Position des Rückstellhebels im Wesentlichen erhalten bleibt. Durch entsprechende Einstellung der Rasterweite der Führungsbahnen kann die Genauigkeit der Positionsübernahme eingestellt werden.

Die Kopplung des Rückstellhebels mit dem Koppelelement erfolgt weiterbildungsgemäß in einfacher Weise durch den Koppelstift der Kulissenführung, welche die Kopplung des Kopplungselementes mit der Gehäusewand des Lüftungs- und Heizungsmoduls bewirkt.

Gemäß einer weiteren besonders vorteilhaften Ausgestaltung der Erfindung steht die Schieberplatte in Wirkverbindung mit einem an der Gehäusewand des Lüftungs- und Heizungsmoduls schwenkbar angelenkten Federelement, dessen Federkraft die Schieberplatte entweder in eine Spotstellung der Luftführungslamellen oder in deren Diffusstellung bewirkenden Position drückt, wobei das Federelement bei einem Verschieben der Schieberplatte zwischen einer eine Spotstellung der Luftführungslamellen und deren Diffusstellung bewirkenden Position ihre Totlage mit maximaler Federkraft durchfährt. Damit ist es möglich, durch manuelle Betätigung die Diffusstellung aufzuheben, so dass das Koppelelement in eine einer Spotstellung entsprechenden Position verschoben wird. Der Rückstellhebel sorgt dafür, dass diese Position der Spotstellung vor der Umstellung in die Diffusstellung entspricht.

Hierzu ist weiterbildungsgemäß zur manuellen Betätigung wenigstens einer Luftführungslamellen ein Bedienelement vorgesehen, wobei die Kulissenführung in der Gehäusewand des Lüftungs- und Heizungsmoduls ausgebildet ist bei einer Betätigung des Bedienelementes in der Diffusstellung der Luftführungslamellen die Bewegung des Koppelelementes zu bestimmen. Diese Bewegung des Koppelelementes wird auf die Schieberplatte übertragen und dabei die Totlage des Federelementes durchfahren. Hiermit ist eine einfache Bedienung für einen Fahrzeuginsassen gegeben, insbesondere auch dann, wenn aufgrund einer von einer Klimaanlage bewirkten aktuatorischen Verschiebung der Schieberplatte in eine die Diffusstellung bewirkende Position, diese durch Betätigung des Bedienelementes aufgehoben werden soll.

In einer Weiterbildung der Erfindung ist die Schieberplatte zweiteilig mit einem ersten, das Koppelelement aufnehmenden Schieberteil und einem mit dem ersten Schieberteil gekoppelten zweiten Schieberteil ausgebildet, wobei das zweite Schieberteil die Führungsbahnen zur Kopplung mit dem freien Ende des Rückstellhebels aufnimmt.

Gemäß einer weiteren vorteilhaften Weiterbildung der Erfindung wird in einfacher Weise für die Kopplung des Koppelelementes mit der Kulissenführung in der Gehäusewand des Lüftungs- und Heizungsmoduls ein Koppelstift eingesetzt. Dabei ist vorzugsweise dieser Koppelstift auch zur Kopplung des Koppelelementes mit der der Neutrallamelle zugeordnete Schwinge vorgesehen. Damit ergibt sich ein einfacher mechanischer Aufbau, da das Koppelelement mittels eines solchen Koppelstiftes sowohl mit der Schwinge der Neutrallamelle, mit der Kulissenführung in der Gehäusewand des Lüftungs- und Heizungsmoduls als auch mit dem Rückstellhebel gekoppelt ist.

Besonders vorteilhaft gemäß einer Ausgestaltung der Erfindung ist der Einsatz einer Antriebseinheit zur Umschaltung zwischen einer Spotstellung der Luftführungslamellen und deren Diffusstellung und umgekehrt, indem die Schieberplatte mit dieser Antriebseinheit, vorzugsweise einem Elektromotor verbunden ist. Damit kann das Lüftungs- und Heizungsmoduls als Klimaanlage entsprechend einem eingestellten Programm über diesen Antrieb eine Verstellung der Luftführungslamellen aus einer Spotstellung in deren Diffusstellung oder umgekehrt bewirken.

Schließlich ist es besonders vorteilhaft, die mechanischen Komponenten in einem Standardmodul zusammenzufassen, so dass ein solches Standardmodul in ein vorbereitetes Ausströmergehäuse mit Luftführungslamellen eingesetzt werden kann. Insbesondere soll es so aufgebaut sein, dass bei Ausströmern gemäß des Standes der Technik, also solche, bei denen zur Verstellung der Luftführungslamellen Koppelstangen vorgesehen sind, diese Koppelstangen gegen ein solches erfindungsgemäßes Standardmodul ausgetauscht werden kann.

Der Vorteil eines solchen Standardmoduls liegt in dessen einfacher Montage als auch in dessen Vorprüfbarkeit.

Die Erfindung wird nachfolgend anhand von Ausführungsbeispielen unter Bezugnahme auf die beigefügten Figuren ausführlich beschrieben. Es zeigen:
- Figur 1: eine schematische Seitenansicht eines Luftausströmers eines ersten Ausführungsbeispiels gemäß der Erfindung mit Luftführungslamellen in einer Neutralstellung,
- Figur 2: eine schematische Seitenansicht eines Luftausströmers nach Figur 1 mit Luftführungslamellen in einer Diffusstellung,
- Figur 3: eine schematische Seitenansicht eines Luftausströmers nach Figur 1 mit Luftführungslamellen in einer Spotstellung,
- Figur 4: eine schematische Seitenansicht eines Luftausströmers nach Figur 2 mit einer die Diffusstellung zentrierenden Kulissenführung,
- Figuren 5: eine schematische Seitenansicht eines Luftausströmers eines zweiten Ausführungsbeispiels gemäß der Erfindung mit einem Rückstellhebels zur Realisierung einer Memory-Funktion,
- Figuren 6: eine schematische Seitenansicht eines Luftausströmers gemäß Figuren 5 zur Darstellung der Funktionsweise der Memory-Funktion,
- Figuren 7: eine schematische Seitenansicht eines Luftausströmers eines dritten Ausführungsbeispiels gemäß der Erfindung mit einer manuellen Umschaltung von der Diffusstellung der Luftführungslamellen in eine Spotstellung,
- Figuren 8: eine schematische Rückansicht des Luftausströmers gemäß Figuren 7,
- Figur 9: eine schematische perspektivische Darstellung eines Luftausströmers gemäß der Erfindung mit einem elektrischen Antrieb zur aktuatorischen Verstellung der Luftführungslamellen zwischen einer Spotstellung und einer Diffusstellung,
- Figur 10: eine schematische perspektivische Darstellung einer Antriebsplatte der Schieberplatte,
- Figur 11: eine schematische Draufsicht auf einen Teil der Antriebsanordnung der Schieberplatte, und
- Figur 12: eine schematische Draufsicht auf einen Teil der Antriebsanordnung aus Antriebshebel und Antriebsplatte.

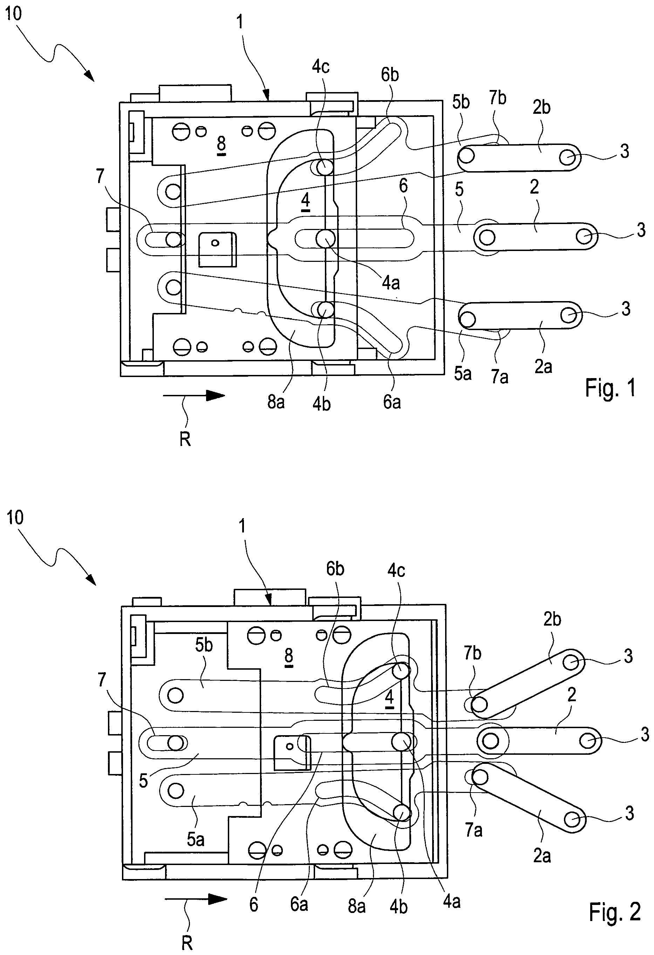

Die Figuren 1 bis 4 zeigen einen Luftausströmer 1 eines Lüftungs- und Heizungsmodul 10, bspw. einer Klimaanlage für Kraftfahrzeuge mit drei nebeneinander angeordneten Luftführungslamellen 2, 2a und 2b, also einer mittleren Luftführungslamelle 2, auch Neutrallamelle genannt und jeweils einer benachbarten Luftführungslamelle 2a und 2b, auch Außenlamellen genannt.

Diese Luftführungslamellen 2, 2a und 2b sind einenends mittels einer fahrzeugfesten Achse 3 in dem Luftausströmer 1 schwenkbar gelagert und andernends jeweils über eine Schwinge 5, 5a und 5b mit einem Koppelelement 4 über jeweils eine Kulissenführung 6, 6a und 6b gekoppelt.

Die der Neutrallamelle 2 zugeordnete Schwinge 5 ist mit einem Ende schwenkbar mit derselben verbunden, während ihr anderes Ende über eine Kulissenführung 7 mit dem Luftausströmer 1 verbunden ist. Diese Kulissenführung umfasst ein am Ende der Schwinge 5 angeordnetes Langloch 7 als Kulisse, in das ein Zapfen des Luftausströmers 1 eingreift.

Die Schwinge 5a bzw. 5b ist einenends über eine Kulissenführung 7a bzw. 7b mit der Außenlamelle 2a bzw. 2b und andernends schwenkbar mit dem Luftausströmer 1 verbunden. Die beiden Kulissenführungen 7a und 7b sind jeweils als ein in der Schwinge 7a bzw. 7b angeordnetes Langloch 7a bzw. 7b ausgeführt, in das ein Zapfen der Außenlamelle 2a bzw. 2b eingreift.

Das Koppelelement 4 ist im Wesentlichen rechteck- und plattenförmig mit drei in senkrechter Richtung zu einer Verschieberichtung R fluchtenden Zapfen 4a, 4b und 4c ausgebildet, wobei der Zapfen 4a als Koppelstift neben der Kopplung mit der Schwinge 5 über ein in derselben angeordnetes Langloch als Kulisse der Kulissenführung 6 mit weiteren Teilen des Luftausströmers 1 eine Kopplung übernimmt. Der Zapfen 4b bzw. 4c greift in eine Kulisse der Kulissenführung 6a bzw. 6b zur Kopplung mit der Schwinge 2a bzw. 2b ein, wobei die Kulissen der Kulissenführungen 6a und 6b jeweils als leicht gekrümmtes Langloch ausgebildet sind.

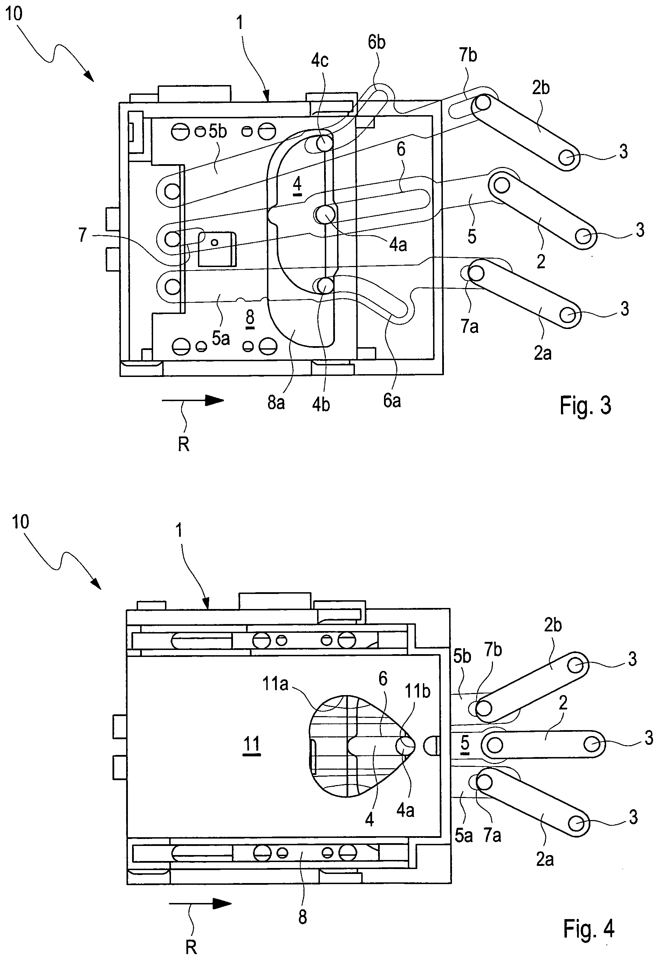

Zum Verschieben des Koppelelementes 4 in Verschieberichtung R aus der in Figur 1 gezeigten Position, die eine Neutralstellung der Luftführungslamellen 2, 2a und 2b (d. h. alle Luftführungslamellen 2, 2a und 2b sind parallel ausgerichtet) darstellt, in eine Diffusstellung der Luftführungslamellen 2, 2a und 2b bewirkende Position, wie in Figur 2 gezeigt ist, oder in eine Position, die entsprechend der Darstellung nach Figur 3 zu einer Spotstellung der Luftführungslamellen 2, 2a und 2b führt, ist eine in dem Gehäuse des Luftausströmers 1 in Verschieberichtung R verschiebbar gelagerte Schieberplatte 8 vorgesehen.

Diese Schieberplatte 8 weist in ihrer Ebene eine Mitnehmeröffnung 8a zur vollständigen Aufnahme des Koppelelementes 4 auf. Diese Mitnehmeröffnung 8a ist derart geformt, dass einerseits bei einer Bewegung der Schieberplatte 8 in oder entgegen der Verschieberichtung R das Koppelelement 4 mitgeschleppt wird und andererseits eine Bewegung des Koppelelementes 4 senkrecht zur Verschieberichtung R ermöglicht wird. Das bedeutet, dass eine relative Bewegung zwischen dem Koppelelement 4 und der Schieberplatte 8 in Verschieberichtung R im Wesentlichen nicht möglich ist, jedoch aufgrund der größeren Ausdehnung der Mitnahmeöffnung 8a senkrecht zur Verschieberichtung R im Vergleich zur entsprechenden Länge des Koppelelementes 4 möglich ist.

Wird aus der Position gemäß Figur 1 die Schieberplatte 8 in Verschieberichtung R bewegt, werden die mit dem Koppelelement 4 gekoppelten Schwingen 2, 2a und 2b gegenüber dem Luftausströmer 1 so verschwenkt, dass gemäß Figur 2 aufgrund der geraden Kulisse der Kulissenführung 6 sich die Lage der Neutrallamelle 2 nicht ändert, jedoch aufgrund der gekrümmten Form der Kulissen der Kulissenführungen 6a und 6b die Außenlamellen 2a und 2b in eine Diffusstellung verschwenkt werden, so dass durch die aufgefächerte Ausrichtung dieser Außenlamellen 2a und 2b ein divergierender Luftstrom entsteht. Um diese Verstellung der Außenlamellen 2a und 2b zu ermöglichen, sind die beiden Schwingen 5a und 5b über die als Langloch ausgebildeten Kulissen der Kulissenführungen 7a und 7b mit den beiden Außenlamellen 2a und 2b verbunden.

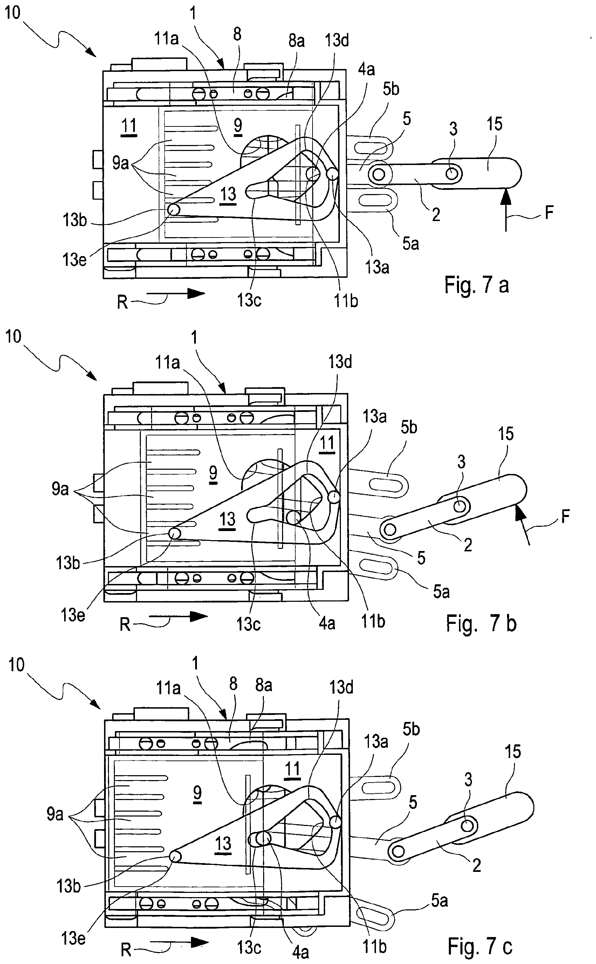

Aus der Neutralstellung der Luftführungslamellen 2, 2a und 2b gemäß Figur 1 können diese auch in jede beliebige Spotstellung verstellt werden, wie dies in Figur 3 dargestellt ist, in der die drei Luftführungslamellen 2, 2a und 2b parallel zueinander aus der Neutralstellung verschwenkt sind, so dass ein nach unten gerichteter Luftstrom entsteht. Dies wird mittels eines manuell betätigbaren Bedienelementes ermöglicht, welches bspw. mit der Neutrallamelle 2 verbunden ist, wie dies z. Bsp. in den Figuren 7a bis 7b schematisch dargestellt ist. Die Bewegung des manuellen Verschwenkens der Neutrallamelle 2 wird über die Schwinge 5 auf den Koppelstift 4a des Koppelelementes 4 übertragen, wodurch dieses Koppelelement 4 senkrecht zur Verschieberichtung R verschoben wird und dabei über die Kopplung mit den Schwingen 5a und 5b die Außenlamellen 2a und 2b verschwenkt werden.

Auch aus dieser Spotstellung gemäß Figur 3 können die Luftführungslamellen 2, 2a und 2b durch Verschieben der Schieberplatte 8 in die Diffusstellung verschwenkt werden. Hierzu wird gemäß Figur 4 das Koppelelement 4 durch Verschieben der Schieberplatte 8 mit einer Gehäusewand 11 des Luftausströmers 1 über eine Kulissenführung 11a gekoppelt, die eine herzförmige Kulisse 11a aufweist, welche den Koppelstift 4a des Koppelelementes 4 entsprechend der Herzkurve führt. Die herzförmige Kulisse 11a ist in der Gehäusewand 11 so orientiert, dass deren Herzspitze 11b den Koppelstift 4a in der Diffusstellung zentriert. Diese Gehäusewand 11 ist aus Übersichtsgründen in den Figuren 1, 2 und 3 nicht dargestellt. Die Zentrierungsfunktion der Herzspitze 11b wirkt auch dann, wenn das Koppelelement 4 aus der Neutralposition gemäß Figur 1 in die die Diffusstellung der Luftführungslamellen 2, 2a und 2b bewirkende Position gemäß Figur 2 verschoben wird.

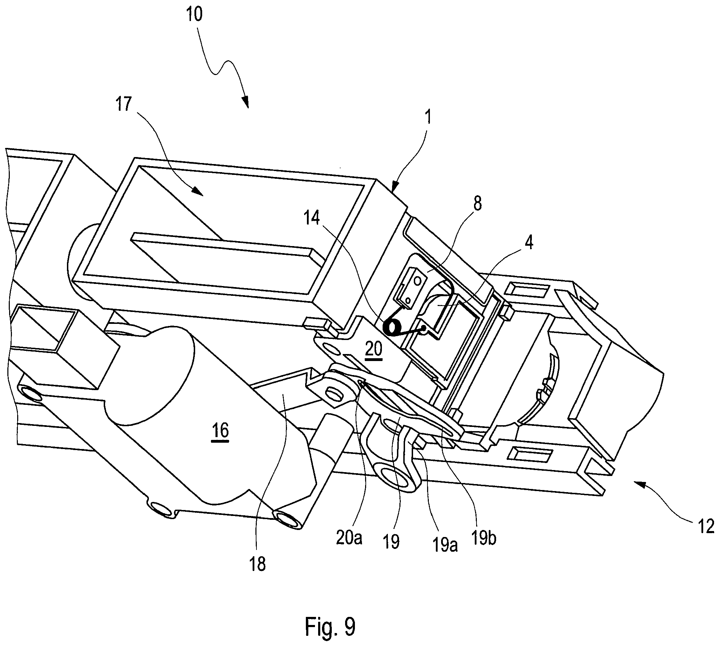

Die Verschiebung der Schieberplatte 8 zur Erzeugung der Diffusstellung der Luftführungslamellen 2, 2a und 2b erfolgt gemäß Figur 9 aktuatorisch mittels einer als Elektromotor ausgeführten Antriebseinheit 16. In dieser perspektivischen Darstellung des Lüftungs- und Heizungsmoduls 10 ist der für den Einbau bspw. in die Instrumententafel eines Fahrzeugs vorgesehene Teil sichtbar, also der rückwärtige Bereich des Luftausströmers 1 mit einer Lufteintrittsöffnung 17 sowie ein unterer Bereich, in dem der Elektromotor 16 montiert ist. Die Luftaustrittsöffnung 12 des Luftausströmers 1 ist in dieser Darstellung nicht sichtbar.

Zur aktuatorischen Verstellung der Schieberplatte 8 ist die Antriebsachse des Elektromotors 16 mit einem Antriebshebel 18 drehfest verbunden, dessen freies Ende drehbar mit einer Antriebsplatte 19 gekoppelt ist, die ihrerseits über einen Hebelarm 19a drehbar an der Unterseite des Luftausströmers 1 angelenkt ist. Ferner weist die Antriebsplatte 19 eine mehrfach bogenförmig ausgebildete Kulisse 19b auf, in die ein Antriebszapfen 20a eines Schieberteils 20, der in Wirkverbindung mit der Schiebeplatte 8 steht, eingreift.

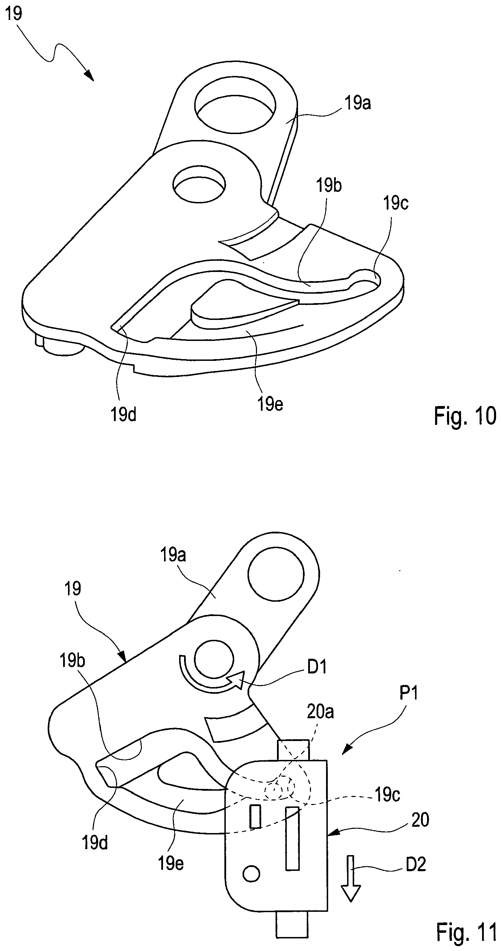

Die Figur 10 zeigt die Antriebsplatte 19 im Detail mit der im Wesentlichen S-förmig verlaufenen Kulisse 19b, die einen Kulissenanfang 19c und ein Kulissenende 19d aufweist, wobei vom Kulissenende 19d eine Führungsnut 19e zurück in den Bereich des Kulissenanfangs 19c führt. Ferner ist diese Antriebsplatte 19 elastisch ausgebildet.

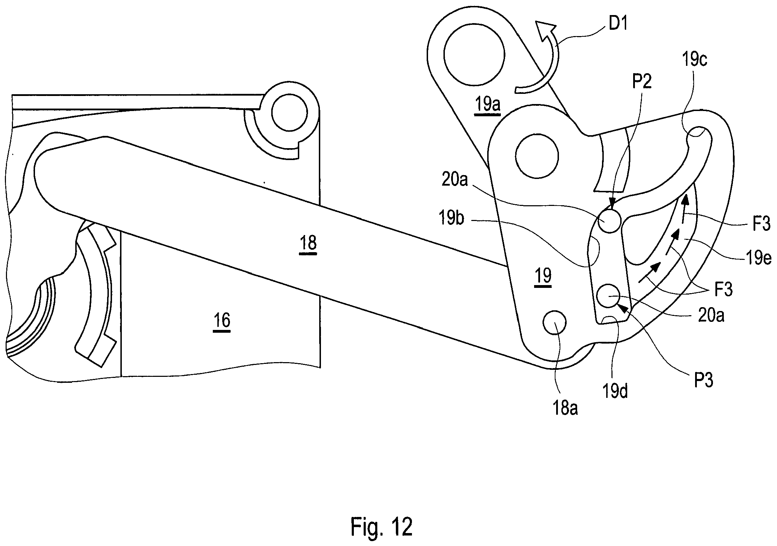

In der Draufsicht gemäß Figur 11 ist die Kopplung des Schieberteils 20 über dessen Antriebszapfen 20a mit der Antriebsplatte 19 gezeigt, wobei der Antriebszapfen 20a sich am Kulissenanfang 19c befindet und damit in einer Position P1, aus welcher die Schieberplatte 8 in eine die Diffusstellung der Luftführungslamellen 2, 2a und 2b bewirkende Position verschoben wird. Hierzu treibt der Elektromotor 16 über den Antriebshebel 18 die Antriebsplatte 19 in Drehrichtung D1 an, wodurch aufgrund der Kopplung des Antriebszapfens 20a mit der Kulisse 19b das Schieberteil 20 in Richtung D2 bewegt wird. Der Antriebshebel 18 ist gemäß Figur 12 über eine Drehachse 18a mit der Antriebsplatte 19 gekoppelt.

Wenn der Antriebszapfen 20a die in Figur 12 bezeichnete Position P2 erreicht, befindet sich auch die Schieberplatte 8 in einer die Diffusstellung der Luftführungslamellen 2, 2a und 2b bewirkende Position. Soll die Diffusstellung aktuatorisch abgeschaltet werden, wird der Elektromotor 16 in entgegengesetzter Drehrichtung angesteuert, so dass dadurch der Antriebszapfen 20a aus der Position P2 wieder in die Position P1 zurückführt wird.

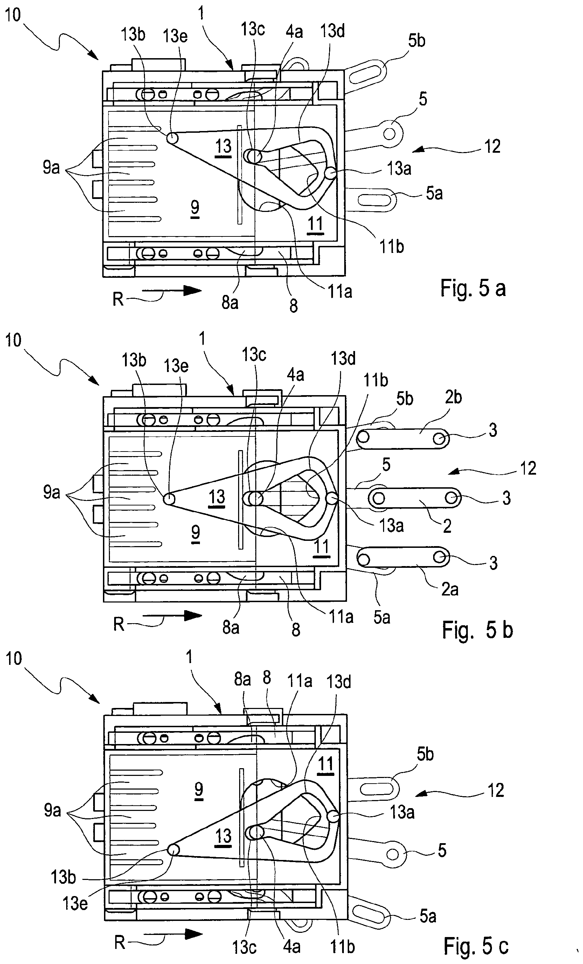

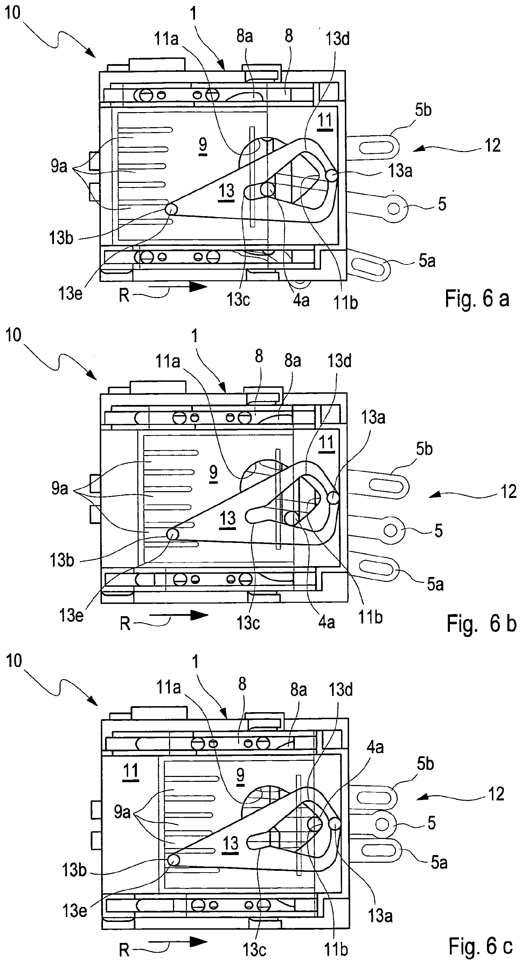

In dem Ausführungsbeispiel gemäß den Figuren 5 und 6 weist der Luftausströmer 1 zusätzlich einen Rückstellhebel 13 auf, der dazu dient, das Koppelelement 4 aus der Position, die die Diffusstellung bewirkt, wieder in diejenige Position zurückzuführen, die vor der Einstellung der Diffusstellung von dem Koppelelement 4 eingenommen wurde. Damit wird eine Memory-Funktion realisiert, mit der wieder diejenige Spotstellung der Luftführungslamellen hergestellt wird, die vor der Verstellung in die Diffusstellung vorhanden war. Dieser Rückstellhebel 13 "speichert" sozusagen die Position des Koppelhebels 4, aus der heraus die Verschiebung in die die Diffusstellung bewirkende Position erfolgt, so dass beim Zurückschieben des Koppelelementes 4 dieser wieder in die "gespeicherte" Position geführt wird.

Gemäß den Figuren 5 und 6 ist dieser Rückstellhebel 13 auf der äußeren Seite der Gehäusewand 11 derart mit einem Drehpunkt 13a im Luftaustrittsbereich des Luftausströmers 1 an demselben angelenkt, so dass er in einer parallel zur Ebene der Gehäusewand 11 liegenden Ebene schwenkbar ist. Dieser Rückstellhebel 13 weist eine V-förmige Geometrie auf, wobei der Drehpunkt 13a an dem der Spitze 13b der V-Form gegenüberliegenden Randbereich liegt.

Dieser Rückstellhebel 13 ist über eine Kulissenführung 13c mit dem Koppelelement 4 gekoppelt, indem eine V-förmige Kulisse mit dem Koppelstift 4a in Wirkverbindung steht. Diese V-förmige Kulisse ist derart gestaltet, dass der Koppelstift 4a in allen Spotstellungen, wie in den Figuren 5a bis 5c dargestellt ist, in der Kulissenspitze 13d der V-Form liegt, die halbkreisförmig ausgebildet ist und in Richtung des Drehpunktes in die V-Form übergeht. Wird das Koppelelement 4 senkrecht zur Verschieberichtung R bewegt, so nimmt der in der halbkreisförmig ausgeführten Kulissenspitze 13d gehaltene Koppelstift 4 den Rückstellhebel 13 in die jeweilige Position mit. Die Figur 5a zeigt das Koppelelement 4 in einer oberen Position, die eine Verstellung der Luftführungslamellen 2, 2a und 2b bewirkt, in der der Luftstrom entsprechend Figur 3 nach unten gelenkt wird. Wird das Koppelelement 4 nach unten verschoben, wird eine Position gemäß Figur 5b durchlaufen, die zu einer Neutralstellung der Luftführungslamellen 2, 2a und 2b führt, bis das Koppelelement 4 in der untersten Position gemäß Figur 5c ankommt, in der die Luftführungslamellen 2, 2a und 2b in einer Spotstellung stehen, in der der Luftstrom nach oben gerichtet ist.

Zur Realisierung dieser Memory-Funktion ist die Schieberplatte zweiteilig ausgebildet, umfasst also einen ersten Schieberteil 8, der der Schieberplatte 8 gemäß den Figuren 1 bis 4 entspricht, und einen zweiten Schieberteil 9, der mit dem ersten Schieberteil 8 fest verbunden ist, so dass bei einer Verschiebung des ersten Schieberteils 8 auch das zweite Schieberteil 9 mitgenommen wird. Dieses zweite Schieberteil 9 ist in dem Luftausströmer 1 derart parallel zum ersten Schieberteil 8 angeordnet, dass der Rückstellhebel 13 zwischen der Gehäusewand 11 und diesem zweiten Schieberteil 9 verschwenkbar ist.

Wird nur aus der Spotstellung gemäß Figur 5c das erste Schieberteil 8 zusammen mit dem zweiten Schieberteil 9 aktuatorisch mittels der Antriebseinheit 16 in Verschieberichtung R unter Mitnahme des Koppelelementes 4 in eine die Diffusstellung der Luftführungslamellen 2, 2a und 2b bewirkende Position verschoben, greift ein am freien Ende 13b des Rückstellhebels 13 angeordneter Positionszapfen 13e in eine von mehreren parallel angeordneten Führungsbahnen 9a ein, die an der zum Positionszapfen 13e des Rückstellhebels 13 benachbarten Seitenkante parallel zur Verschieberichtung R angeordnet sind. Diese Führungsbahnen 9a sind so angeordnet, dass mit Beginn des Verschiebens der beiden Schieberteile 8 und 9 in Verschieberichtung R der Positionszapfen 13e in diejenige Führungsbahn 9a eingreift, ohne dass hierzu der Rückstellhebel 13 wesentlich verschwenkt wird.

Dann entspricht die Lage dieser den Positionszapfen 13e führenden Führungsbahn 9a der aktuellen Position des Koppelelementes 4, wie dies bspw. in Figur 5c dargestellt ist, aus der die Verschiebung des Koppelementes 4 in die die Diffusstellung bewirkende Position gemäß den Figuren 6a bis 6c erfolgt.

Bei der Verschiebung der beiden Schieberteile 8 und 9 aus der Position gemäß Figur 5c in eine Position gemäß Figur 6c bewegt sich der Koppelstift 4a aus der Kulissenspitze 13d heraus und wird zunächst von der V-förmigen Kulisse 13c geführt, bevor die Führung von der herzförmigen Kulisse 11a der Gehäusewand 11 übernommen wird. In dieser Position gemäß Figur 6b ist bereits auch der Positionszapfen 13e des Rückstellhebels 13 in die passende Führungsbahn 9a eingefahren.

Nun übernimmt die herzförmige Kulisse 11a die Führung des Rastzapfens 4a bis zum Ende der Verschiebebewegung der Schiebeteile 8 und 9, wo dieser Rastzapfen 4a an der Herzspitze 11b der Kulisse 11a die die Diffusstellung der Luftführungslamellen 2, 2a und 2b bewirkende zentrierende Position erreicht hat, wie dies in Figur 6c dargestellt ist.

Werden umgekehrt aus der Position gemäß Figur 6c die Schiebeteile 8 und 9 in ihre ursprüngliche Position gemäß Figur 5c verschoben, verläuft die Bewegung des Rastzapfens 4a umgekehrt, also in einer Abfolge der Figuren 6b und 6a, bis der Rastzapfen 4a gemäß Figur 6a von der Kulisse 13d in die halbkreisförmige Kulissenspitze 13c geführt wird und diese Position aufgrund der von der Führungsbahn 9a gehaltenen Position des Rückstellhebels 13 genau der ursprünglichen Position des Koppelelementes 4 gemäß Figur 5c entspricht, die der Ausgangsstellung zum Verschieben des Koppelelementes 4 in die die Diffusstellung bewirkende Position gemäß Figur 6c entspricht.

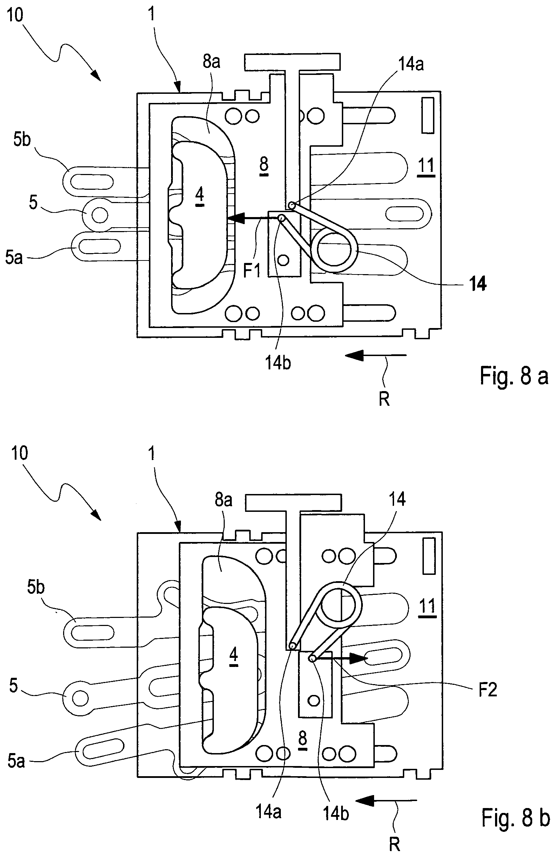

Die Figuren 7 und 8 zeigen ein Ausführungsbeispiel, bei dem trotz aktuatorisch mittels der Antriebseinheit 16 eingestellten Diffusstellung, diese durch eine manuelle Betätigung eines mit der Neutrallamelle 2 verbundenen Bedienelementes 15 abgeschaltet werden kann, also die Luftführungslamellen 2, 2a und 2b in eine Spotstellung zurückverschwenkt werden können, ohne dass ein Schaden an der Mechanik entsteht und daher diese im Folgenden erläuterte Funktion als Missbrauchsschutz bezeichnet wird.

Hierzu wird zunächst auf die Figuren 8a und 8b Bezug genommen, die im Gegensatz zu den Figuren 1 bis 7 die Rückseite dieser Darstellung zeigen, die der Außenseite des Luftausströmers 1 gemäß Figur 9 entspricht.

Gemäß diesen Figuren 8a und 8b ist die Schieberplatte 8 (dabei ist auch der erste Schieberteil 8 gemeint) mit dem Gehäuse des Luftausströmers 1 über eine Schenkelfeder als Federelement 14 gekoppelt, indem ein Ende 14a verschwenkbar an dem Gehäuse des Luftausströmers 1 angelenkt und das andere Ende 14b mit der Schieberplatte 8 verschwenkbar verbunden ist. Hierbei wirkt die Federkraft F1 bzw. F2 dieser Schenkelfeder 14 derart, dass diese die Schieberplatte 8 entweder in die Diffusstellung der Luftführungslamellen 2, 2a und 2b gemäß Figur 8a oder in die eine Spotstellung der Luftführungslamellen 2, 2a und 2b bewirkenden Position gemäß Figur 8b gedrückt wird, wobei die Schenkelfeder 14 bei einem Verschieben der Schieberplatte 8 zwischen diesen Positionen ihre Totlage mit maximaler Federkraft durchfährt.

Die Totlage der Schenkelfeder 14 wird in einer Verschiebestellung der Schieberplatte 8 dann erreicht, wenn sich die Schenkelfeder 14 soweit um das Ende 14a gedreht hat, dass die Kraftrichtung der Schenkelfeder 14 senkrecht auf der Bewegungsrichtung, also der Verschieberichtung R steht. Sobald dieser Punkt überfahren ist, wirkt die Federkraft wieder auf die Schieberplatte 8, je nach dem in welche Richtung die Schieberplatte 8 gerade verschoben wird, also entweder in Richtung der die Diffusstellung bewirkende Position (Figur 8a) oder in die eine Spotstellung bewirkende Position (Figur 8b).

Wie bereits oben beschrieben, kann bei diesem Ausführungsbeispiel in der Diffusstellung der Luftführungslamellen 2, 2a und 2b das mit der Neutrallamelle 2 verbundene Bedienelement 15 gemäß Figur 7a und 7b mit einer Bedienkraft entsprechend des Kraftpfeils F beaufschlagt werden. Dies führt zu einem Verschwenken der Neutrallamelle 2 um die Achse 3, wodurch das mit der Neutrallamelle 2 verbunden Ende der Schwinge 5 nach unten gedrückt wird, so dass dadurch die am Koppelstift 4a wirkende Querkraft diesen aus der Herzspitze 11b entlang der Kontur der Kulisse 11a führt, wie dies in Figur 7b dargestellt ist. Bei dieser Bewegung wird natürlich der Schieber 8 über das Koppelelement 4 mitgenommen. Diese Bewegung ist möglich, da - wie oben beschrieben - der Schieber 8 in der Diffusstellung nur durch die am Gehäuse des Luftausströmers 1 abgestützte Schenkelfeder 14 gehalten wird.

Sobald die manuell mittels des Bedienelementes initiierte Bewegung der Schieberplatte 8 die Totlage der Schenkelfeder 14 überfahren hat, wird ausgehend von der in Figur 7b dargestellter Position die Schieberplatte 8 in die Ausgangsposition gemäß Figur 7c zurückgeschoben, die aufgrund der oben bereits beschriebenen Memory-Funktion die Spotstellung bewirkt, die vor der Verstellung in die Diffusstellung von den Luftführungslamellen 2, 2a und 2b eingenommen wurde.

Diese manuelle Verschiebung der Schieberplatte 8 aus einer die Diffusstellung der Luftführungslamellen bewirkenden Position erfolgt wie oben anhand der Figur 12 beschrieben wurde, aus einer Position P2 des Antriebszapfens 20a. Die nach dem Überfahren der Totlage der Schenkelfeder 14 von derselben bewirkte Verschiebung der Schieberplatte aus der die Diffusstellung bewirkenden Position, lässt aufgrund der Kopplung mit der Antriebsplatte 19 über das Schieberteil 20 dessen Antriebszapfen 20a aus der Position P2 entlang der Kulisse 19b bis an das Kulissenende 19d verfahren, die in Figur 12 als Position P3 bezeichnet ist. Gleichzeitig befindet sich der Elektromotor 16 bzw. der Antriebshebel 18 noch in einer Stellung, die der eingeschalteten Diffusstellung entspricht.

Erst wenn der Elektromotor 16 bspw. von einer Klimasteuerung wieder angesteuert wird, d. h. in seine Ausgangsstellung zurückgeführt wird, dreht sich der Antriebshebel 18, so dass sich die Antriebsplatte 19 entgegen der Drehrichtung D1 verschwenkt, wodurch der Antriebszapfen 20a auf die Führungsnut 19e schnappt und aus der Position P3 entlang dieser Führungsnut 19e gemäß den Pfeilen F3 in den Bereich des Kulissenanfangs 19c zurückgeführt wird und dort in seine Anfangsposition P1 (vgl. Figur 11) wieder einrastet. Für diesen Vorgang ist die Elastizität der Antriebsplatte erforderlich.

Damit ist es möglich, ohne Schädigung der Antriebseinheit 16 die aktuatorisch veranlasste Diffusstellung der Luftführungslamellen 2, 2a und 2b manuell abzuschalten, so dass die Luftführungslamellen 2, 2a und 2b wieder in eine Spotstellung bzw. in die zuvor eingenommene Spotstellung geführt werden.

Bei den oben beschriebenen Ausführungsbeispielen wird eine Antriebseinheit 16 zur Verstellung der Luftführungslamellen 2, 2a und 2b aus einer Spotstellung in die Diffusstellung oder umgekehrt zum Zurückstellen der Luftführungslamellen aus der Diffusstellung in die zuvor eingestellte Spotstellung verwendet. Genauso ist natürlich eine manuelle Verstellung der Schieberplatte 8 mittels eines geeigneten Bedienelementes möglich, wobei in diesem Fall auch die oben beschriebene Memory-Funktion und die Missbrauchsfunktion in gleicher Weise realisiert werden können.

In gleicher Weise können anstelle der in den Ausführungsbeispielen dargestellten drei Luftführungslamellen 2, 2a und 2b zusätzlich weitere Luftführungslamellen vorgesehen werden, die in gleicher Weise entsprechend der Erfindung als Außenlamellen behandelt werden.

Desweiteren ist es möglich die mechanischen Komponenten in einem Standardmodul zusammenzufassen, so dass ein solches Standardmodul in ein vorbereitetes Ausströmergehäuse mit Luftführungslamellen eingesetzt werden kann. Insbesondere soll es so aufgebaut sein, dass bei Ausströmern gemäß des Standes der Technik, also solche, bei denen zur Verstellung der Luftführungslamellen Koppelstangen vorgesehen sind, diese Koppelstangen gegen ein solches erfindungsgemäßes Standardmodul ausgetauscht werden kann. Hierzu umfasst ein solches Standardmodul wenigstens die Schwingen 5, 5a und 5b, das Koppelelement 4 und die Schiebeplatte 8.

Der Vorteil eines solchen Standardmoduls liegt in dessen einfacher Montage als auch in dessen Vorprüfbarkeit.

### Bezugszeichen

- 1: Luftausströmer
- 2: Luftführungslamelle, Neutrallamelle
- 2a: Luftführungslamelle, Außenlamelle
- 2b: Luftführungslamelle, Außenlamelle
- 3: erste Achse
- 4: Koppelelement
- 4a: Koppelstift
- 5: Schwinge der Neutrallamelle 2
- 5a: Schwinge der Außenlamelle 2a
- 5b: Schwinge der Außenlamelle 2b
- 6: Kulissenführung der Schwinge 5
- 6a: Kulissenführung der Schwinge 5a
- 6b: Kulissenführung der Schwinge 5b
- 7: Kulissenführung der Schwinge 5
- 7a: Kulissenführung der Schwinge 5a
- 7b: Kulissenführung der Schwinge 5b
- 8: Schieberplatte, erstes Schieberteil
- 8a: Mitnehmeröffnung des ersten Schieberteils 8
- 9: Schieberplatte, zweites Schieberteil
- 9a: Führungsbahn des zweiten Schieberteils 9

- 10: Lüftungs- und Heizungsmodul
- 11: Gehäusewand des Lüftungs- und Heizungsmoduls 10
- 11a: Kulissenführung, Kulisse
- 11b: Herzspitze der Kulisse 11a
- 12: Luftaustrittsöffnung des Luftausströmers 1
- 13: Rückstellhebel
- 13a: Drehpunkt des Rückstellhebels 13
- 13b: freies Ende des Rückstellhebels 13
- 13c: Kulissenführung des Rückstellhebels 13, Kulisse
- 13d: Kulissenspitze der Kulisse 13c
- 13e: Positionszapfen des Rückstellhebels 13
- 14: Federelement, Schenkelfeder
- 14a: Federende des Federelementes 14
- 14b: Federende des Federelementes 14
- 15: Bedienelement.
- 16: Antriebseinheit
- 17: Lufteintrittsöffnung des Luftausströmers 1
- 18: Antriebshebel der Antriebseinheit 16
- 18a: Drehachse des Antriebshebels 18
- 19: Antriebsplatte
- 19a: Hebelarm der Antriebsplatte 19
- 19b: Kulisse der Antriebsplatte 19
- 19c: Kulissenanfang der Kulisse 19b
- 19d: Kulissenende der Kulisse 19b
- 19e: Führungsnut 19e

- 20: Schieberteil
- 20a: Antriebszapfen

## Patentansprüche

1. Luftausströmer (1) eines Lüftungs- und Heizungsmoduls (10) für Kraftfahrzeuge, welcher wenigstens waagerecht verlaufende Luftführungslamellen (2, 2a, 2b) aufweist, die um eine fahrzeugfeste Achse (3) schwenkbar und jeweils mit einem Koppelelement (4) gekoppelt sind, wobei wenigstens eine Luftführungslamelle (2a, 2b) über eine Koppelstange mit dem Koppelelement (4) gekoppelt ist und das Koppelelement (4) relativ zur fahrzeugfesten Achse (3) zwischen wenigstens einer eine Neutralstellung und eine Diffusstellung der Luftführungslamellen (2, 2a, 2b) bewirkende Position in eine Verschieberichtung (R) verschiebbar ist,
**dadurch gekennzeichnet, dass**
- für jede Luftführungslamelle (2, 2a, 2b) die Koppelstange als Schwinge (5, 5a, 5b) ausgebildet ist, welche einenends mit einer Luftführungslamelle (2, 2a, 2b) und andernends schwenkbar mit dem Lüftungs- und Heizungsmodul (10) gekoppelt ist, und
- jede Schwinge (5, 5a, 5b) über eine Kulissenführung (6, 6a, 6b) mit dem Koppelelement (4) gekoppelt ist.

2. Luftausströmer nach Anspruch 1,
**dadurch gekennzeichnet, dass** eine Neutrallamelle (2) vorgesehen ist, deren zugeordnete Schwinge (5) über eine geradlinige Kulissenführung (6) mit dem Koppelelement (4) gekoppelt ist, und
- beidseitig der Neutrallamelle (2) wenigstens eine Außenlamelle (2a, 2b) vorgesehen ist, deren jeweilige zugeordnete Schwinge (5a, 5b) zur Erzeugung der Diffusstellung über eine gekrümmte Kulissenführungen (6a, 6b) mit dem Koppelelement (4) gekoppelt ist.

3. Luftausströmer nach einem der vorhergehenden Ansprüche,
**dadurch gekennzeichnet, dass** zur Erzeugung einer Spotstellung der Luftführungslamellen (2, 2a, 2b) das Koppelelement (4) senkrecht zu dessen Verschieberichtung (R) verschiebbar ist, wobei die Schwinge (5) einer Neutrallamelle (2) mittels einer eine Schwenkbewegung ermöglichende Kulissenführung (7) mit dem Lüftungs- und Heizungsmodul (10) gekoppelt ist und die Schwinge (5a, 5b) von wenigstens einer, jeweils beidseitig der Neutrallamelle (2) angeordneten Außenlamelle (2a, 2b) mittels einer eine Schwenkbewegung ermöglichende Kulissenführung (7a, 7b) mit den Außenlamellen (2a, 2b) gekoppelt ist.

4. Luftausströmer nach einem der vorhergehenden Ansprüche,
**dadurch gekennzeichnet, dass** eine verschiebbare Schieberplatte (8, 9) mit einer das Koppelelement (4) aufnehmenden Mitnehmeröffnung (8a) vorgesehen ist, mit welcher eine translatorische Bewegung der Schieberplatte (8, 9) auf das Koppelelement (4) übertragen wird.

5. Luftausströmer nach Anspruch 3 und 4,
**dadurch gekennzeichnet, dass** zur Erzeugung einer Spotstellung der Luftführungslamellen (2, 2a, 2b) die Mitnehmeröffnung (8a) ausgebildet ist zum Verschieben des Koppelelementes (4) senkrecht zu dessen ersten Verschieberichtung (R1).

6. Luftausströmer nach einem der vorhergehenden Ansprüche,
**dadurch gekennzeichnet, dass** zur Zentrierung der Diffusstellung der Luftführungslamellen (2, 2a, 2b) das Koppelelement (4) über eine Kulissenführung (11a) mit einer Gehäusewand (11) des Lüftungs- und Heizungsmoduls (10) gekoppelt ist.

7. Luftausströmer nach Anspruch 6,
**dadurch gekennzeichnet, dass** die Kulisse der Kulissenführung (11a) im Wesentlichen herzförmig mit einer in die Verschieberichtung (R) des Koppelelementes (4) verlaufenden Herzspitze (11b) ausgebildet ist, wobei zur Erzeugung der Diffusstellung das Koppelelement (4) mittels eines Koppelstiftes (4a) in die Herzspitze (11b) geführt wird.

8. Luftausströmer nach einem der vorhergehenden Ansprüche,
**dadurch gekennzeichnet, dass**
- ein im Bereich der Austrittsöffnung (12) des Luftausströmers (1) angelenkter Rückstellhebel (13) vorgesehen ist, welcher über eine Kopplung mit dem Koppelelement (4) in eine der Spotstellung der Luftführungslamellen (2, 2a, 2b) entsprechenden Memory-Position verschwenkbar ist,
- das freie Ende (13b) des in die Memory-Position verschwenkten Rückstellhebels (13) unter Einhaltung dessen Schwenkstellung in Wirkverbindung mit einer in Wirkverbindung mit dem Koppelelement (4) stehenden Schieberplatte (8, 9) über den Verschiebeweg dieser Schieberplatte (8, 9) in eine die Diffusstellung der Luftführungslamellen (2, 2a, 2b) bewirkende Position steht, und
- die Kopplung des Rückstellhebels (13) mit dem Koppelelement (4) als Kulissenführung (13c, 13d) ausgebildet ist, welche beim Verschieben der Schieberplatte (8, 9) aus der die Diffusstellung bewirkende Position eine Mitnahme des Koppelelementes (4) in die Memory-Position bewirkt.

9. Luftausströmer nach Anspruch 8,
**dadurch gekennzeichnet, dass** zur Erzeugung der Wirkverbindung des freien Endes (13b) des Rückstellhebels (13) mit der Schieberplatte (8, 9) der Rückstellhebel (13) einen in Führungsbahnen (9a) der Schieberplatte (8, 9) eingreifenden Positionszapfen (13e) aufweist.

10. Luftausströmer nach Anspruch 8 oder 9,
**dadurch gekennzeichnet, dass** der Koppelstift (4a) der die Kopplung des Kopplungselementes (4) mit der Gehäusewand (11) des Lüftungs- und Heizungsmoduls (10) bewirkende Kulissenführung (11a) für die Kopplung mit dem Rückstellhebel (13) ausgebildet ist.

11. Luftausströmer nach einem der Ansprüche 6 bis 10,
**dadurch gekenntzeichnet,** dass die Schieberplatte (8, 9) in Wirkverbindung mit einem an der Gehäusewand (11) des Lüftungs- und Heizungsmoduls (10) schwenkbar angelenkten Federelement (14) steht, dessen Federkraft die Schieberplatte (8, 9) entweder in eine Spotstellung der Luftführungslamellen (2, 2a, 2b) oder in deren Diffusstellung bewirkenden Position drückt, wobei das Federelement (14) bei einem Verschieben der Schieberplatte (8, 9) zwischen einer eine Spotstellung der Luftführungslamellen (2, 2a, 2b) und deren Diffusstellung bewirkenden Position ihre Totlage mit maximaler Federkraft durchfährt.

12. Luftausströmer nach Anspruch 11,
**dadurch gekennzeichnet, dass**
- zur manuellen Betätigung wenigstens einer Luftführungslamellen (2) ein Bedienelement (15) vorgesehen ist, und
- die Kulissenführung (11a) in der Gehäusewand (11) des Lüftungs- und Heizungsmoduls (10) ausgebildet ist bei einer Betätigung des Bedienelementes (15) in der Diffusstellung der Luftführungslamellen (2, 2a, 2b) die Bewegung des Koppelelementes (4) zu bestimmen, wobei diese Bewegung des Koppelelementes (4) auf die Schieberplatte (8, 9) übertragen und dabei die Totlage des Federelementes (14) durchfahren wird.

13. Luftausströmer nach einem der Ansprüche 8 bis 12,
**dadurch gekennzeichnet, dass** die Schieberplatte (8, 9) zweiteilig mit einem ersten, das Koppelelement (4) aufnehmenden Schieberteil (8) und einem mit dem ersten Schieberteil (8) gekoppelten zweiten Schieberteil (9) ausgebildet ist, wobei das zweite Schieberteil (9) die Führungsbahnen (9a) zur Kopplung mit dem freien Ende (13b) des Rückstellhebels (13) aufnimmt.

14. Luftausströmer nach Anspruch 13,
**dadurch gekennzeichnet, dass** für die Kopplung des Koppelelementes (4) mit der Kulissenführung (11a) in der Gehäusewand (11) der Koppelstift (4a) vorgesehen ist.

15. Luftausströmer nach einem der vorhergehenden Ansprüche,
**dadurch gekennzeichnet, dass** zur Kopplung der der Neutrallamelle (2) zugeordneten Schwinge (5) der Koppelstift (4a) vorgesehen ist.

16. Luftausströmer nach einem der vorhergehenden Ansprüche,
**dadurch gekennzeichnet, dass** zur Umschaltung zwischen einer Spotstellung der Luftführungslamellen (2, 2a, 2b) und deren Diffusstellung und umgekehrt die Schieberplatte (8, 9) mit einer Antriebseinheit (16), vorzugsweise einem Elektromotor verbunden ist.

## Claims

1. Air outlet (1) of a ventilation and heating module (10) for motor vehicles, which has air-directing fins (2, 2a, 2b) running at least horizontally, which are pivotable about a vehicle-fixed axis (3) and are coupled to a coupling element (4) respectively, wherein at least one air-directing fin (2a, 2b) is coupled to the coupling element (4) via a coupling rod and the coupling element (4) is able to be displaced in a displacement direction (R) relative to the vehicle-fixed axis (3) between at least one position causing a neutral position and a diffused position of the air-directing fins (2, 2a, 2b),
**characterised in that**
- for each air-directing fin (2, 2a, 2b), the coupling rod is formed as a swingarm (5, 5a, 5b) which is coupled at one end to an air-directing fin (2, 2a, 2b) and at the other end pivotably to the ventilation and heating module (10), and
- each swingarm (5, 5a, 5b) is coupled to the coupling element (4) via a sliding block guide (6, 6a; 6b).

2. Air outlet according to claim 1,
**characterised in that**
a neutral fin (2) is provided, the swingarm (5) allocated to which is coupled to the coupling element (4) via a linear sliding block guide (6), and
- at least one outer fin (2a, 2b) is provided on both sides of the neutral fin (2), the respective allocated swingarm (5a, 5b) of said outer fin being coupled to the coupling element (4) for generating the diffused position via curved sliding block guides (6a, 6b).

3. Air outlet according to one of the preceding claims,
**characterised in that**,
for generating a spot position of the air-directing fins (2, 2a, 2b), the coupling element (4) is able to be displaced perpendicularly to the displacement direction (R) thereof, wherein the swingarm (5) of a neutral fin (2) is coupled to the ventilation and heating module (10) by means of a sliding block guide (7) enabling a pivot movement and the swingarm (5a, 5b) of at least one outer fin (2a, 2b) arranged on both sides of the neutral fin (2) respectively is coupled to the outer fins (2a, 2b) by means of a sliding block guide (7a, 7b) enabling a pivot movement.

4. Air outlet according to one of the preceding claims,
**characterised in that** a displaceable slide plate (8, 9) is provided with a tappet opening (8a) receiving the coupling element (4), using which a translational movement of the slide plate (8, 9) is transferred to the coupling element (4).

5. Air outlet according to claim 3 and 4,
**characterised in that**,
for generating a spot position of the air-directing fins (2, 2a, 2b), the tappet opening (8a) is formed to displace the coupling element (4) perpendicularly to the first displacement direction (R1) thereof.

6. Air outlet according to one of the preceding claims,
**characterised in that**,
for centring the diffused position of the air-directing fins (2, 2a, 2b), the coupling element (4) is coupled to a housing wall (11) of the ventilation and heating module (10) via a sliding block guide (11a).

7. Air outlet according to claim 6,
**characterised in that**
the sliding block of the sliding block guide (11a) is formed to be substantially heart-shaped with a heart tip (11b) running in the displacement direction (R) of the coupling element (4), wherein for generating the diffused position, the coupling element (4) is guided into the heart tip (11b) by means of a coupling pin (4a).

8. Air outlet according to one of the preceding claims,
**characterised in that**
- a reset lever (13) attached in the region of the outlet opening (12) of the air outlet (1) is provided, which able to pivot into a memory position corresponding to the spot position of the air-directing fins (2, 2a, 2b) via a coupling to the coupling element (4),
- the free end (13b) of the reset lever (13) pivoted into the memory position is set in a position causing the diffused position of the air-directing fins (2, 2a, 2b) by maintaining the pivot position thereof in active connection to a slide plate (8, 9) that is in active connection with the coupling element (4) over the displacement path of this slide plate (8, 9), and
- the coupling of the reset lever (13) to the coupling element (4) is formed as a sliding block guide (13c, 13d), which causes a carrying of the coupling element (4) into the memory position during displacement of the slide plate (8, 9) from the position causing the diffused position.

9. Air outlet according to claim 8,
**characterised in that**,
for generating the active connection of the free end (13b) of the reset lever (13) to the slide plate (8, 9), the reset lever (13) has a position pin (13e) engaging with guide rails (9a) of the slide plate (8, 9).

10. Air outlet according to claim 8 or 9,
**characterised in that**
the coupling pin (4a) of the sliding block guide (11a) causing the coupling of the coupling element (4) to the housing wall (11) of the ventilation and heating module (10) is formed for the coupling to the reset lever (13).

11. Air outlet according to one of claims 6 to 10,
**characterised in that**
the slide plate (8, 9) is in active connection to a spring element (14) attached pivotably to the housing wall (11) of the ventilation and heating module (10), the spring force of which presses the slide plate (8, 9) either into a spot position of the air-directing fins (2, 2a, 2b) or into the position causing the diffused position thereof, wherein the spring element (14) passes through its dead-centre position with maximum spring force in the case of a displacement of the slide plate (8, 9) between a position causing a spot position of the air-directing fins (2, 2a, 2b) and the diffused position thereof.

12. Air outlet according to claim 11,
**characterised in that**,
- for manual actuation of at least one air-directing fin (2), an operating element (15) is provided, and
- the sliding block guide (11a) is formed in the housing wall (11) of the ventilation and heating module (10) in the case of an actuation of the operating element (15) in the diffused position of the air-directing fins (2, 2a, 2b) to determine the movement of the coupling element (4), wherein this movement of the coupling element (4) transfers to the slide plate (8, 9) and therein is driven through the dead-centre position of the spring element (14).

13. Air outlet according to one of claims 8 to 12,
**characterised in that**
the slide plate (8, 9) is formed in two parts having a first slide part (8) receiving the coupling element (4) and a second slide part (9) coupled to the first slide part (8), wherein the second slide part (9) receives the guide rails (9a) for coupling to the free end (13b) of the reset lever (13).

14. Air outlet according to claim 13,
**characterised in that**,
the coupling pin (4a) is provided for the coupling of the coupling element (4) to the sliding block guide (11a) in the housing wall (11).

15. Air outlet according to one of the preceding claims,
**characterised in that**
the coupling pin (4a) is provided for the coupling of the swingarm (5) allocated to the neutral fin (2).

16. Air outlet according to one of the preceding claims, **characterised in that** the slide plate (8, 9) is connected to a drive unit (16), preferably an electric motor, for switching between a spot position of the air-directing fins (2, 2a, 2b) and the diffused position thereof and vice versa.

## Revendications

1. Diffuseur d'air (1) d'un module de ventilation et de chauffage (10) pour des véhicules automobiles, lequel présente au moins des lamelles de guidage d'air (2, 2a, 2b) s'étendant de manière horizontale, lesquelles peuvent pivoter autour d'un axe (3) solidaire du véhicule et sont couplées respectivement à un élément de couplage (4), dans lequel au moins une lamelle de guidage d'air (2a, 2b) est couplée à l'élément de couplage (4) par l'intermédiaire d'une tige de couplage et l'élément de couplage (4) peut être coulissé dans une direction de coulissement (R) par rapport à l'axe (3) solidaire du véhicule entre au moins une position neutre et une position provoquant une position de diffusion des lamelles de guidage d'air (2, 2a, 2b),
**caractérisé en ce que**
- pour chaque lamelle de guidage d'air (2, 2a, 2b), la tige de couplage est réalisée sous la forme d'un bras oscillant (5, 5a, 5b), qui est couplé, au niveau d'une extrémité, à une lamelle de guidage d'air (2, 2a, 2b) et, au niveau de l'autre extrémité, de manière à pouvoir pivoter au module de ventilation et de chauffage (10), et
- chaque bras oscillant (5, 5a, 5b) est couplé par l'intermédiaire d'un guidage à coulisse (6, 6a, 6b) à l'élément de couplage (4).

2. Diffuseur d'air selon la revendication 1,
**caractérisé en ce que**
une lamelle neutre (2) est prévue, dont le bras oscillant (5) associé est couplé à l'élément de couplage (4) par l'intermédiaire d'un guidage à coulisse (6) rectiligne, et
- au moins une lamelle extérieure (2a, 2b) est prévue de part et d'autre de la lamelle neutre (2), le bras oscillant (5a, 5b) respectivement associé de ladite lamelle extérieure étant couplé à l'élément de couplage (4) par l'intermédiaire de guidages à coulisse (6a, 6b) incurvés afin de générer la position de diffusion.

3. Diffuseur d'air selon l'une quelconque des revendications précédentes,
**caractérisé en ce que** l'élément de couplage (4) peut être coulissé de manière perpendiculaire par rapport à sa direction de coulissement (R) afin de générer une position de focalisation des lamelles de guidage d'air (2, 2a, 2b), dans lequel le bras oscillant (5) d'une lamelle neutre (2) est couplé au module de ventilation et de chauffage (10) au moyen d'un guidage à coulisse (7) permettant un déplacement par pivotement et le bras oscillant (5a, 5b) d'au moins une lamelle extérieure (2a, 2b) disposée respectivement de part et d'autre de la lamelle neutre (2) est couplé aux lamelles extérieures (2a, 2b) au moyen d'un guidage à coulisse (7a, 7b) permettant un déplacement par pivotement.

4. Diffuseur d'air selon l'une quelconque des revendications précédentes,
**caractérisé en ce qu'**une plaque à coulisseau (8, 9) pouvant être coulissée est prévue avec une ouverture d'entraînement (8a) recevant l'élément de couplage (4), à l'aide de laquelle un déplacement par translation de la plaque à coulisseau (8, 9) est transmis à l'élément de couplage (4).

5. Diffuseur d'air selon la revendication 3 et 4,
**caractérisé en ce que** l'ouverture d'entraînement (8a) est réalisée afin de coulisser l'élément de couplage (4) de manière perpendiculaire par rapport à sa première direction de coulissement (R1) afin de générer une position de focalisation des lamelles de guidage d'air (2, 2a, 2b).

6. Diffuseur d'air selon l'une quelconque des revendications précédentes,
**caractérisé en ce qu'**afin de centrer la position de diffusion des lamelles de guidage d'air (2, 2a, 2b), l'élément de couplage (4) est couplé à une paroi de boîtier (11) du module de ventilation et de chauffage (10) par l'intermédiaire d'un guidage à coulisse (11a).

7. Diffuseur d'air selon la revendication 6,
**caractérisé en ce que** la coulisse du guidage à coulisse (11a) est réalisée sensiblement en forme de coeur avec une pointe de coeur (11b) s'étendant dans la direction de coulissement (R) de l'élément de couplage (4), dans lequel afin de générer la position de diffusion, l'élément de couplage (4) est guidé dans la pointe de coeur (11b) au moyen d'une broche de couplage (4a).

8. Diffuseur d'air selon l'une quelconque des revendications précédentes,
**caractérisé en ce que**
- un levier de rappel (13) articulé dans la zone de l'ouverture de sortie (12) du diffuseur d'air (1) est prévu, lequel peut être pivoté par l'intermédiaire d'un couplage à l'élément de couplage (4) dans une position mémorisée correspondant à la position de focalisation des lamelles de guidage (2, 2a, 2b),
- l'extrémité (13b) libre du levier de rappel (13) pivoté dans la position mémorisée coopère, en maintenant sa position de pivotement, avec une plaque à coulisseau (8, 9) coopérant avec l'élément de couplage (4) sur le trajet de coulissement de ladite plaque à coulisseau (8, 9) dans une position provoquant la position de diffusion des lamelles de guidage d'air (2, 2a, 2b), et
- le couplage du levier de rappel (13) à l'élément de couplage (4) est réalisé sous la forme d'un guidage à coulisse (13c, 13d), qui provoque un entraînement de l'élément de couplage (4) dans la position mémorisée lors du coulissement de la plaque à coulisseau (8, 9) hors de la position provoquant la position de diffusion.

9. Diffuseur d'air selon la revendication 8,
**caractérisé en ce qu'**afin de générer la coopération de l'extrémité (13b) libre du levier de rappel (13) avec la plaque à coulisseau (8, 9), le levier de rappel (13) présente un tourillon de position (13e) venant en prise avec des voies de guidage (9a) de la plaque à coulisseau (8, 9).

10. Diffuseur d'air selon la revendication 8 ou 9,
**caractérisé en ce que** la broche de couplage (4a) du guidage à coulisse (11a) provoquant le couplage de l'élément de couplage (4) à la paroi de boîtier (11) du module de ventilation et de chauffage (10) est réalisée en vue du couplage au levier de rappel (13).

11. Diffuseur d'air selon l'une quelconque des revendications 6 à 10,
**caractérisé en ce que** la plaque à coulisseau (8, 9) coopère avec un élément formant ressort (14) articulé de manière à pouvoir pivoter au niveau de la paroi de boîtier (11) du module de ventilation et de chauffage (10), dont la force de ressort pousse la plaque à coulisseau (8, 9) soit dans une position de focalisation des lamelles de guidage d'air (2, 2a, 2b) soit dans leur position provoquant une position de diffusion, dans lequel l'élément formant ressort (14) traverse son point mort avec une force de ressort maximale lors d'un coulissement de la plaque à coulisseau (8, 9) entre une position de focalisation des lamelles de guidage d'air (2, 2a, 2b) et une position provoquant leur position de diffusion.

12. Diffuseur d'air selon la revendication 11,
**caractérisé en ce que**
- afin d'actionner manuellement au moins une lamelle de guidage d'air (2), un élément de commande (15) est prévu, et
- le guidage à coulisse (11a) dans la paroi de boîtier (11) du module de ventilation et de chauffage (10) est réalisé pour, lors d'un actionnement de l'élément de commande (15) dans la position de diffusion des lamelles de guidage d'air (2, 2a, 2b), définir le déplacement de l'élément de couplage (4), dans lequel ledit déplacement de l'élément de couplage (4) est transmis à la plaque à coulisseau (8, 9) et le point mort de l'élément formant ressort (14) est dans ce cadre traversé.

13. Diffuseur d'air selon l'une quelconque des revendications 8 à 12,
**caractérisé en ce que** la plaque à coulisseau (8, 9) est réalisée en deux parties avec une première partie de coulisseau (8) recevant l'élément de couplage (4) et avec une seconde partie de coulisseau (9) couplée à la première partie de coulisseau (8), dans lequel la seconde partie de coulisseau (9) reçoit les voies de guidage (9a) destinées à être couplées à l'extrémité (13b) libre du levier de rappel (13).

14. Diffuseur d'air selon la revendication 13,
**caractérisé en ce que** la broche de couplage (4a) est prévue en vue du couplage de l'élément de couplage (4) au guidage à coulisse (11a) dans la paroi de boîtier (11).

15. Diffuseur d'air selon l'une quelconque des revendications précédentes,
**caractérisé en ce que** la broche de couplage (4a) est prévue aux fins du couplage du bras oscillant (5) associé à la lamelle neutre (2).

16. Diffuseur d'air selon l'une quelconque des revendications précédentes,
**caractérisé en ce qu'**aux fins de la commutation entre une position de focalisation des lamelles de guidage d'air (2, 2a, 2b) et leur position de diffusion, et inversement, la plaque à coulisseau (8, 9) est reliée à une unité d'entraînement (16), de préférence à un moteur électrique.
